(19) Europäisches Patentamt
European Patent Office
Office européen des brevets

(11) Publication number: **0 357 194 A1**

(12) # EUROPEAN PATENT APPLICATION

(21) Application number: 89306829.6

(51) Int. Cl.[5]: C08K 5/29 , C08L 67/02

(22) Date of filing: 05.07.89

Claims for the following Contracting State: GR.

(30) Priority: 30.08.88 US 238464

(43) Date of publication of application: 07.03.90 Bulletin 90/10

(84) Designated Contracting States: AT BE CH DE ES FR GB GR IT LI LU NL SE

(71) Applicant: HOECHST CELANESE CORPORATION
Route 202-206 North
Somerville, N.J. 08876(US)

(72) Inventor: Golder, Michael D.
38 Harreton Road
Allendale New Jersey(US)

(74) Representative: De Minvielle-Devaux, Ian Benedict Peter et al
CARPMAELS & RANSFORD 43, Bloomsbury Square
London WC1A 2RA(GB)

(54) **Blends of copolyester elastomers and carbodiimides.**

(57) Elastomeric compositions having resistance to hot grease aging are made from a blend of a thermoplastic copolyester elastomer and a carbodiimide.

EP 0 357 194 A1

# BLENDS OF COPOLYESTER ELASTOMERS AND CARBODIIMIDES

## Background of Invention

The field of art to which this invention is directed is modified thermoplastic copolyester elastomers.

Segmented thermoplastic copolyester elastomers, which contain recurring polymeric long chain ester units derived from phthalic acids and long chain glycols and short chain ester units derived from phthalic acids and short chain glycols, are described in such patents as U.S. 3,651,014, 3,763,109 and 4,355,155.

U.S. Patent No. 3,835,098 describes a process for improving the thermal and hydrolytic stability of copolyester elastomers by reacting the elastomer with substantially linear polycarbodiimides having an average of at least two carbodiimide groups per molecule.

Blends of copolyester elastomers, ethylene/carboxylic acid copolymers and polycarbodiimides are described in U.S. Patent No. 3,963,801.

In many applications, e.g., constant velocity boots used in front-wheel drive automobiles, there is a need for elastomeric compositions which can stand extended contact with hot grease without losing strength and elastomeric properties.

## Summary of Invention

This invention is directed to thermoplastic copolyester elastomer compositions having improved resistance to hot grease. This invention relates to thermoplastic copolyester-carbodiimide blends.

The compositions of this invention are made from a blend of (A) about 95 to about 99.5 weight percent thermoplastic copolyester elastomer, and (B) about 0.5 to about 5 weight percent of a carbodiimide wherein said weight percentages are based on the total weight of (A) and (B). The thermoplastic copolyester elastomer, which is also referred to as a segmented copolyester elastomer, is comprised of a multiplicity of recurring long chain ester units and short chain ester units joined head to tail through ester linkages. The long chain ester units are represented by the formula:

$$-OGO-\overset{\overset{O}{\|}}{C}-R-\overset{\overset{O}{\|}}{C}-$$

and the short chain ester units are represented by the formula:

$$-ODO-\overset{\overset{O}{\|}}{C}-R-\overset{\overset{O}{\|}}{C}-$$

wherein G is a divalent radical remaining after the removal of the terminal hydroxyl groups from a polyether glycol having a molecular weight in the range from about 400 to about 6,000, R is a hydrocarbon radical remaining after removal of the carboxyl groups from one or more aromatic dicarboxylic acids, and D is a divalent radical remaining after removal of hydroxyl groups from one or more aliphatic diols having 2 to 5 carbon atoms. The short chain ester units make up about 30 to about 85 weight percent of the copolyester.

The carbodiimides contain only one carbodiimide group per molecule and are represented by the formula:

$$R^1N = C = NR^2$$

wherein $R^1$ and $R^2$ are alkyl, cycloalkyl, and aryl groups.

## Description of Invention

The thermoplastic copolyester elastomers useful in this invention are described in detail in U.S. Patent No. 4,355,155, which is hereby incorporated by reference. These elastomers are made up of a multiplicity of recurring long chain ester units and short chain ester units joined head to tail through ester linkages, said long chain ester units being represented by the formula:

$$-OGO-\overset{\overset{O}{\|}}{C}-R-\overset{\overset{O}{\|}}{C}-$$

and said short chain units being represented by the formula:

$-ODO-\overset{O}{\overset{\|}{C}}-R-\overset{O}{\overset{\|}{C}}-$

wherein G is divalent radical remaining after the removal of the terminal hydroxyl groups from a polyether glycol, wherein R is a hydrocarbon radicals remaining after removal of the carboxyl groups from one or more aromatic dicarboxylic acid, and wherein D is a divalent radical remaining after removal of hydroxyl groups from one or more aliphatic diols containing 2 to 5 carbon atoms.

The short chain segments in the elastomer amount to between about 30 percent and about 85 weight percent, preferably about 45 percent to about 65 weight percent, of the co-polyester.

The aliphatic diols useful in this invention contain 2 to 5 carbon atoms, examples of which are ethylene glycol, 1,3-propanediol, 1,4-butanediol, 1,4-butenediol, neopentyl glycol and 1,5-pentanediol. Mixtures of these diols can be used. The preferred diols are 1,4-butanediol or 1,4-butenediol or mixtures thereof. Preferably, between about 10 weight percent and about 40 weight percent, most preferably about 20 to about 30 weight percent, of the D groups in the above formula represent radicals remaining after removal of hydroxyl groups from 1,4-butenediol with the remainder being from 1,4-butanediol.

The long chain polyether glycols used to make the copolyester elastomers have a molecular weight between about 400 and about 6,000. Such polyether glycols are polyoxyalkylene glycols wherein the alkylene groups contain 2 to 4 carbon atoms. Examples of such polyether glycols are polyoxyethylene glycols, polyoxypropylene glycols and polyoxybutylene glycols or polyoxytetramethylene glycols. A preferred polyether glycol is polyoxytetramethylene glycol which is derived from tetrahydrofuran. A particularly preferred polyoxytetramethylene glycol is one having an average molecular weight of about 1,000.

The aromatic dicarboxylic acids useful in this invention contain two carboxylic groups attached to the aromatic ring and no other groups reactive with hydroxyl groups under esterification conditions. Examples of such acids are phthalic acid, isophthalic acid, terephthalic acid, the naphthalic acids, and diphenic acid. The preferred acids are terephthalic acid and isophthalic acid or mixtures thereof. Mixtures which contain terephthalic acid with about 1 percent to about 20 percent by weight of isophthalic acid are used when products of lower flexural modulus are desired.

The carbodiimides useful in this invention are monomeric having only one carbodiimide group per molecule, and are represented by the formula:

$R^1N = C = NR^2$

wherein $R^1$ and $R^2$ are alkyl groups containing from 1 to about 18 carbon atoms, cycloalkyl groups containing 5 to about 10 carbon atoms and aryl groups, which term includes alkaryl and arylalkyl groups, containing 5 to about 18 carbon atoms. Examples of such carbodiimides are dimethyl carbodiimide, diisopropyl carbodiimide, diisobutyl carbodiimide, dioctyl carbodiimide, tert-butyl isopropyl carbodiimide, dodecyl isopropyl carbodiimide, dicylohexyl carbodiimide, diphenyl carbodiimide, di-o-tolyl carbodiimide, bis(2, 6-diethylphenyl) carbodiimide, bis(2, 6-diisopropylphenyl carbodiimide, di-β-naphthyl carbodiimide, benzyl isoopropyl carbodiimide, phenyl-o-tolyl carbodiimide, and the like. Preferred carbodiimides are those wherein the R groups are aromatic. A particularly preferred carbodiimide is bis(2,6-diisopropylphenyl) carbodiimide. Carbodiimides are described in detail in "The Chemistry of Carbodiimides" by H.G. Khorana - Chemical Reviews, Vol. 53, page 145-166 (1953), which is hereby incorporated by reference.

The compositions of this invention are made from a blend of (A) the thermoplastic polyester elastomer and (B) a carbodiimide. The compositions contain: about 95 to about 99.5 weight percent thermoplastic copolyester elastomer and, preferably, about 96.5 to about 99.5 weight percent; and about 0.5 to about 5 weight percent carbodiimide and, preferably, 0.5 to about 3.5 weight percent. The weight percents are based on the total weight of (A) and (B).

The copolyester elastomer and the carbodiimide are tumble blended, followed by melt compounding on single screw or twin screw extruders. The blended compositions are then extruded in sheet form.

The following examples will describe the invention in more detail. Parts and percentages unless otherwise designated are parts and percentages by weight.

## Example A

The compositional data and the physical properties of the copolyester elastomers used in the examples are shown in Table A.

TABLE A

| Copolyester | A | B |
|---|---|---|
| Shore D Hardness | 47 | 55 |
| Wt % Hard Segment | 53 | 62 |
| Wt % Soft Segment | 47 | 38 |
| Melting Point °C of Copolyester | 178 | 184 |
| Melt Index (220°C and 2160 Cm) | 6.0 | 6.0 |
| Inherent Viscosity | 1.35 | 1.35 |

All of the copolyesters contained both 1,4-butenediol ($B_2D$) and 1,4-butenediol ($B_1D$) in the hard segments in a mole ratio of $B_2D/(B_1D + B_2D) = 0.25$.

## Example 1

The copolyester elastomers described in Example A were tumble blended with bis(2,6-diisopropylphenyl) carbodiimide, were melt compounded on a one inch single screw extruder at 420°F and at 80 RPM and were extruded in sheet form. Resistance to hot grease aging was determined on ASTM D412 tensile bars stamped from the extruded sheets. The tensile bars were placed in jars filled with grease used in the front wheel drive systems of automobiles and were placed in ovens heated at 100°C for the times indicated in Table 1. The tensile strength at break (TS-BK) and the tensile elongation at break (ELONG-BK) were determined on the tensile bars before aging and after aging. The percent retention of these properties was then calculated. The amount of each component in the blend and the strength retention properties are listed in Table 1.

TABLE 1

| Example | 1a | 1b | 1c | 1d | 1e |
|---|---|---|---|---|---|
| Copolyester A | 100 | 97.5 | | | |
| Copolyester B | | | 100 | 99.5 | 98 |
| Carbodiimide | | 2.5 | | 0.5 | 2 |
| 3 Weeks | | | | | |
| % Retention-TS-BK | 48 | 55 | 41 | 58 | |
| % Retention-Elong-BK | 13 | 79 | 66 | 81 | |
| 4 Weeks | | | | | |
| % Retention-TS-BK | | | 41 | | 62 |
| % Retention-Elong-BK | | | 24 | | 79 |
| 6 Weeks | | | | | |
| % Retention-TS-BK | 42 | 44 | 41 | 38 | 46 |
| % Retention-Elong-BK | 4 | 13.5 | 13 | 21 | 65 |

## Example 2

Additional blends were made from copolyester elastomer and bis(2,6-diisopropylphenyl) carbodiimide. These data are shown in Table 2.

Table 2

| Example | 2a | 2b | 2c | 2d |
|---|---|---|---|---|
| Copolyester A% | 100 | 97.5 | | |
| Copolyester B% | | | 100 | 98 |
| Carbodiimide % | | 2.5 | | 2 |
| 6 Weeks | | | | |
| % Retention-TS-BK | 42 | 44 | 41 | 46 |
| % Retention-Elong-BK | 4 | 13.5 | 12 | 65 |

As can be seen from the data shown in Tables 1 and 2, the resistance of copolyester elastomers to hot grease is dramatically increased by modifying the elastomers with carbodiimides.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in the art without departing from the spirit and scope of the invention.

## Claims

1. An elastomeric composition comprising a blend of:
(A) 95 to 99.5 weight percent thermoplastic copolyester elastomer; and
(B) 0.5 to 5 weight percent of a carbodiimide, said weight percents being based on the total weight of (A) and (B), wherein the copolyester elastomer comprises a multiplicity of recurring long chain ester units and short chain ester units joined head to tail through ester linkages, said long chain units being represented by the formula:

$$-OGO-\overset{O}{\overset{\|}{C}}-R-\overset{O}{\overset{\|}{C}}-$$

and said short chain units being represented by the formula:

$$-ODO-\overset{O}{\overset{\|}{C}}-R-\overset{O}{\overset{\|}{C}}-$$

wherein G is a divalent radical remaining after the removal of the terminal hydroxyl groups from a polyether glycol having molecular weight in the range of 400 to 6000, wherein R is a hydrocarbon radical remaining after removal of the carboxyl groups from an aromatic dicarboxylic acid, and wherein D is a divalent radical remaining after removal of hydroxyl groups from an aliphatic diol containing 2 to 5 carbon atoms, provided said short chain segments amount to 30 to 85 percent by weight of the copolyester;
wherein the carbodiimide is represented by the formula:

$R^1N = C = NR^2$

wherein $R^1$ and $R^2$ are alkyl groups, cycloalkyl groups, or aryl groups.

2. The composition of Claim 1 wherein the aromatic dicarboxylic acid is terephthalic acid or isophthalic acid or a mixture thereof, wherein the aliphatic diol is 1,4-butanediol or 1,4-butenediol or a mixture thereof, and wherein the $R^1$ and $R^2$ substituents of the carbodiimide are alkyl groups containing 1 to 18 carbon atoms, cycloalkyl groups containing 5 to 10 carbon atoms, or aryl groups (which term includes alkaryl and arylalkyl groups) containing 6 to 18 carbon atoms.

3. The composition of Claim 1 or 2 wherein (A) is present in the amount of 96.5 to 99.5 weight percent and (B) is present in the amount of 0.5 to 3.5 weight percent.

4. The composition of any of Claims 1-3 wherein the polyether glycol is a polyoxyalkylene glycol wherein the alkylene groups contain two to four carbon atoms.

5. The composition of Claim 4 wherein the polyether glycol is polyoxytetramethylene glycol having an average molecular weight of about 1000.

6. The composition of any of Claims 1-5 wherein the short chain segments amount to 45 percent to 65 percent by weight of the copolyester.

7. The composition of any of Claims 1-6 wherein 10 percent to 40 percent of the D groups represent divalent radicals remaining after removal of hydroxyl groups from 1,4-butanediol.

8. The composition of any of Claims 1-6 wherein 20 percent to 30 percent of the D groups represent divalent radicals remaining after removal of hydroxyl groups from 1,4-butenediol.

9. The composition of any of Claims 1-8 wherein the R groups are hydrocarbon radicals remaining after the removal of carboxyl groups from terephthalic acid.

10. The composition of any of Claims 1-8 wherein 1 to 20 percent of the R groups are hydrocarbon radicals remaining after removal of the carboxyl groups from isophthalic acid.

11. The composition of any of Claims 1-10 wherein $R^1$ and $R^2$ are aromatic groups.

12. The composition of Claim 11 wherein the carbodiimide is bis(2,6-diisopropylphenyl) carbodiimide.

Claims for the following Contracting State: GR

1. A process for the production of an elastomeric composition comprising forming a blend of:

(A) 95 to 99.5 weight percent thermoplastic copolyester elastomer; and

(B) 0.5 to 5 weight percent of a carbodiimide, said weight percents being based on the total weight of (A) and (B), wherein the copolyester elastomer comprises a multiplicity of recurring long chain ester units and short chain ester units joined head to tail through ester linkages, said long chain units being represented by the formula:

$$-OGO-\overset{\overset{O}{\|}}{C}-R-\overset{\overset{O}{\|}}{C}-$$

and said short chain units being represented by the formula:

$$-ODO-\overset{\overset{O}{\|}}{C}-R-\overset{\overset{O}{\|}}{C}-$$

wherein G is a divalent radical remaining after the removal of the terminal hydroxyl groups from a polyether glycol having molecular weight in the range of 400 to 6000, wherein R is a hydrocarbon radical remaining after removal of the carboxyl groups from an aromatic dicarboxylic acid, and wherein D is a divalent radical remaining after removal of hydroxyl groups from an aliphatic diol containing 2 to 5 carbon atoms provided said short chain segments amount to 30 to 85 percent by weight of the copolyester;

wherein the carbodiimide is represented by the formula:

$R^1N = C = NR^2$

wherein $R^1$ and $R^2$ are alkyl groups, cycloalkyl groups, or aryl groups.

2. The process of Claim 1 wherein the aromatic dicarboxylic acid is terephthalic acid or isophthalic acid or a mixture thereof, wherein the aliphatic diol is 1,4-butanediol or 1,4-butenediol or a mixture thereof, and wherein the $R^1$ and $R^2$ substituents of the carbodiimide are alkyl groups containing 1 to 18 carbon atoms, cycloalkyl groups containing 5 to 10 carbon atoms, or aryl groups (which term includes alkaryl and arylalkyl groups) containing 6 to 18 carbon atoms.

3. The process of Claim 1 or 2 wherein (A) is present in the amount of 96.5 to 99.5 weight percent and (B) is present in the amount of 0.5 to 3.5 weight percent.

4. The process of any of Claims 1-3 wherein the polyether glycol is a polyoxyalkylene glycol wherein the alkylene groups contain two to four carbon atoms.

5. The process of Claim 4 wherein the polyether glycol is polyoxytetramethylene glycol having an average molecular weight of about 1000.

6. The process of any of Claims 1-5 wherein the short chain segments amount to 45 percent to 65 percent by weight of the copolyester.

7. The process of any of Claims 1-6 wherein 10 percent to 40 percent of the D groups represent divalent radicals remaining after removal of hydroxyl groups from 1,4-butenediol.

8. The process of any of Claims 1-6 wherein 20 percent to 30 percent of the D groups represent divalent radicals remaining after removal of hydroxyl groups from 1,4-butenediol.

9. The process of any of Claims 1-8 wherein the R groups are hydrocarbon radicals remaining after the removal of carboxyl groups from terephthalic acid.

10. The process of any of Claims 1-8 wherein 1 to 20 percent of the R groups are hydrocarbon radicals remaining after removal of the carboxyl groups from isophthalic acid.

11. The process of any of Claims 1-10 wherein $R^1$ and $R^2$ are aromatic groups.

12. The process of Claim 11 wherein the carbodiimide is bis(2,6-diisopropylphenyl) carbodiimide.

13. The process of any of Claims 1-12 wherein the blend is formed by tumble blending followed by melt compounding and extrusion in sheet form.

European Patent Office

# EUROPEAN SEARCH REPORT

Application Number

EP 89 30 6829

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 197 789 (POLYPLASTICS)<br>* Page 7, lines 19-14; page 1, lines 1-7, examples *<br>--- | 1-11 | C 08 K 5/29<br>C 08 L 67/02 |
| A,D | US-A-4 355 155 (NELSON)<br>* Claims; examples *<br>--- | 1-11 | |
| A | FR-A-1 308 502 (FARBENFABRIKEN BAYER)<br>* Example 3 *<br>----- | 1,2 | |
| | | | **TECHNICAL FIELDS SEARCHED (Int. Cl.5)** |
| | | | C 08 K<br>C 08 L |

The present search report has been drawn up for all claims

| Place of search | Date of completion of the search | Examiner |
|---|---|---|
| THE HAGUE | 23-11-1989 | WILSON A.J.D. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document